# FASCICULE DE BREVET EUROPEEN

(11) **EP 3 785 400 B1**
(45) Date de publication et mention de la délivrance du brevet: **30.03.2022**
(21) Numéro de dépôt: 19725998.9
(22) Date de dépôt: 27.05.2019
(51) Int. Cl.: H04L 12/10, H04L 12/28

(54) **PROCÉDÉ DE RÉENREGISTREMENT D'UN COMPTEUR ÉLECTRIQUE INTELLIGENT**
VERFAHREN ZUR ERNEUTEN REGISTRIERUNG FÜR EINEN INTELLIGENTEN STROMZÄHLER
RE-REGISTRATION METHOD FOR A SMART ELECTRIC METER

(30) Priorité: 28.05.2018 FR 1854515
(43) Date de publication de la demande: 03.03.2021
(73) Titulaire: Sagemcom Energy & Telecom SAS, 92500 Rueil-Malmaison (FR)
(72) Inventeur: TEBOULLE, Henri, 92500 RUEIL MALMAISON (FR); ROTER, Ziv, 92500 RUEIL MALMAISON (FR); SERGI, Jérémie, 92500 RUEIL MALMAISON (FR)
(74) Mandataire: Cabinet Le Guen Maillet
(86) Numéro de dépôt international: PCT/EP2019/063580
(87) Numéro de publication internationale: WO 2019/228948

(56) Documents cités:
- EP-A1- 3 122 061
- EP-A1- 3 182 281

## Description

La présente invention concerne le réenregistrement d'un compteur électrique intelligent dans un réseau de communication par courants porteurs en ligne, suite à une déconnexion du compteur électrique intelligent. Des demandes de brevet EP3182281A1 et EP3122061A1 il est connu un procédé de mise à jour de logiciel d'un compteur intelligent lors d'une déconnexion et reconnexion de ce dernier à un réseau CPL, respectivement l'échange d'informations de chiffrement dans un réseau CPL comprenant un compteur intelligent et des concentrateurs de données.

Les réseaux de communication par courants porteurs en ligne (« PowerLine Communications » en anglais) pour des systèmes de type AMM (« Automated Meter Management » en anglais) ont fait leur apparition ces dernières années. On peut par exemple citer les spécifications PRIME (« PoweRline Intelligent Metering Evolution » en anglais) et le standard G3-PLC spécifié dans la recommandation ITU-T G.9903. Dans de tels réseaux de communication par courants porteurs en ligne, des communications sont établies entre des compteurs électriques, dits intelligents (« smart electrical meters » en anglais), et un dispositif concentrateur de données (« data concentrator » en anglais), parfois appelé *nœud de base* (« base node » en anglais), ou *coordinateur* (« coordinator » en anglais), pour permettre notamment une relève automatisée à distance de mesures de consommation électrique effectuées par lesdits compteurs électriques intelligents. Une pluralité de tels dispositifs concentrateurs de données est typiquement géographiquement déployée de manière à répartir la charge de gestion à distance d'une multitude de compteurs électriques intelligents, chaque dispositif concentrateur de données étant ensuite connecté à une même entité de gestion du système de type AMM qui est gérée par l'opérateur du réseau d'alimentation électrique auquel lesdits compteurs électriques intelligents sont connectés.

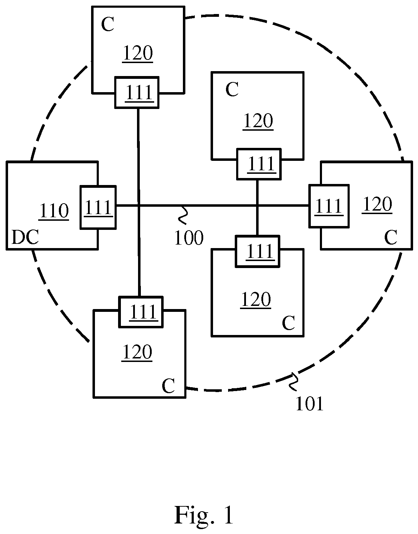

Un système de communication comportant un concentrateur de données DC 110 auquel est connectée, de manière logique, une pluralité de compteurs électriques intelligents C 120 est schématiquement illustré sur la **Fig. 1**. Pour permettre d'échanger des données entre les compteurs électriques intelligents C 120 et le dispositif concentrateur de données DC 110, des communications par courants porteurs en ligne sont établies. Un réseau de communication par courants porteurs en ligne 101 est ainsi formé entre le dispositif concentrateur de données DC 110 et la pluralité de compteurs électriques intelligents C 120 qui lui est connectée, en s'appuyant sur un réseau d'alimentation électrique 100 servant à alimenter en électricité les installations électriques que lesdits compteurs électriques intelligents C 120 sont en charge de surveiller. Ainsi le dispositif concentrateur de données DC 110 et chaque compteur électrique intelligent C 120 comporte ainsi une interface 111 de communication par courants porteurs en ligne lui permettant de communiquer via le réseau de communication par courants porteurs en ligne 101. Selon un exemple de réalisation, le réseau de communication par courants porteurs en ligne 101 est un réseau de routage *ad hoc*, *e.g.* conforme au standard G3-PLC.

Les communications par courants porteurs en ligne doivent faire face à des interférences liées à des phénomènes de diaphonie, et/ou à un manque de fiabilité de certains liens de communication dans le réseau de communication par courants porteurs en ligne (*e.g.* limite de portée due à la longueur des câbles), et/ou à des bruits de différentes natures (bruits blancs, bruits colorés, bruits impulsionnels principalement), et/ou à des désadaptations d'impédance. Pour rappel, la diaphonie est un phénomène qui permet à des signaux, typiquement par couplage capacitif, de se propager sans passer par des paires de cuivre proprement dites, mais par des liens parasites non visibles. Ce phénomène est instable, car pouvant varier en fonction de la température ou de l'activité sur le réseau de communication par courants porteurs en ligne. A noter qu'il peut également y avoir de la diaphonie au sein d'un même appareil via des liaisons cuivre sur circuits imprimés et/ou via certains composants qui constituent ledit appareil. Ces phénomènes peuvent entraîner des pertes de paquets ou messages, notamment de paquets ou messages de signalisation, et entraîner des déconnexions de compteurs électriques intelligents du réseau de communication.

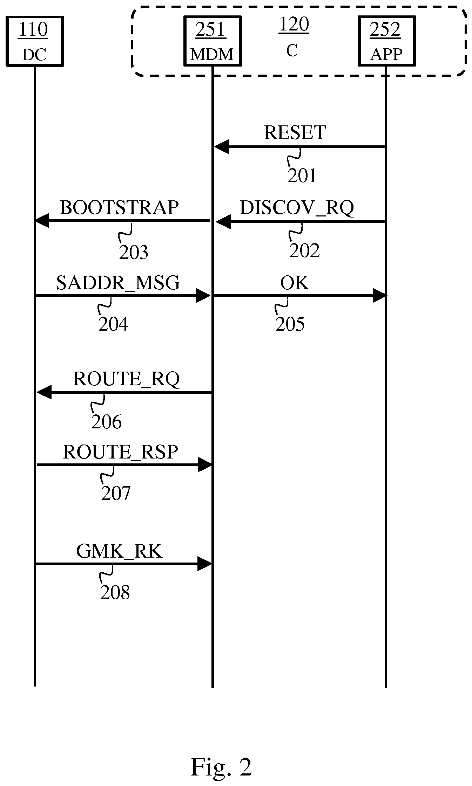

Lorsqu'un compteur électrique intelligent est déconnecté d'un réseau *ad hoc* de communication par courants porteurs en ligne, et que ce compteur électrique intelligent cherche à réintégrer le d'un réseau *ad hoc* de communication par courants porteurs en ligne, une procédure de réenregistrement est déclenchée, et le compteur électrique intelligent doit échanger un ensemble de messages pour remplir une table de routage représentative de routes de communication utilisables dans le d'un réseau *ad hoc* de communication par courants porteurs en ligne. Cet aspect est schématiquement illustré sur la **Fig. 2**, où un dit compteur électrique intelligent C 120 laisse apparaître un partie modem MDM 251, gérant les communications par courants porteurs en ligne, et une partie application APP 252, qui fait appel à la partie modem MDM 251 pour transmettre des données applicatives dans le réseau de communication par courants porteurs en ligne 101.

A la mise en service du compteur électrique intelligent C 120, dans une étape 201, l'application APP 252 envoie un signal de remise à zéro RESET au modem MDM 251 qui par conséquent s'initialise. Dans une étape 202, l'application APP 252 envoie au modem MDM 251 un signal DISCOV_RQ de demande de découverte réseau.

Dans une étape 203, le modem MDM 251 découvre le réseau de communication par courants porteurs en ligne 101 géré par le dispositif concentrateur DC 110 grâce à une procédure dite « bootstrap » dans la terminologie 6LoWPAN (acronyme de « IPv6 Low power Wireless Personal Area Networks » en anglais). Dans une étape 204, le modem MDM 251 acquiert une adresse, dite adresse courte, S_ADDR qui lui est attribuée pour identifier le compteur électrique intelligent C 120 en question dans le réseau de communication par courants porteurs en ligne 101. Le modem MDM 251 obtient aussi un identifiant de réseau PAN_ID qui identifie le réseau de communication par courants porteurs en ligne 101 ainsi qu'une clef de chiffrement GMK, qui est elle-même chiffrée grâce à une autre clef de chiffrement OTP_PSK préconfigurée au sein du modem MDM 251, *e.g.* à la fabrication du compteur électrique intelligent C 120, et dérivée d'une clef connue du dispositif concentrateur DC 110. La clef de chiffrement GMK sert ensuite au modem MDM 251 pour chiffrer et déchiffrer des communications sur le réseau de communication par courants porteurs en ligne 101. Dans une étape 205, le modem MDM 251 envoie un signal OK à l'application 252 pour indiquer avoir répondu à la demande de découverte réseau.

Suite à des échanges de messages de découverte de route ROUTE_RQ (Route Request) et ROUTE_RSP (Route Reply) dans des étapes 206 et 207 dans le réseau de communication par courants porteurs en ligne 101, le modem MDM 251 met à jour une table de routage RT qui répertorie des informations de routes dans le réseau de communication par courants porteurs en ligne 101, telles que :
- Une adresse de destination de route (le point de départ étant le compteur électrique intelligent C 120 dudit modem MDM 251) ;
- Une adresse du prochain relais à contacter pour rejoindre la destination de route ;
- Une information de coût de route ;
- Une information de quantité de relais, dits « sauts » (« hops » en anglais), de la route ;
- Une information de quantité de liens faibles (en dessous d'un certain seuil de performance) sur la route ;
- Une information de période temporelle de validité de la route (e.g. temps restant avant expiration de la route ou instant de péremption de la route).

Des renouvellements de la clé de chiffrement GMK peuvent initiés, dans une étape 208, par le dispositif concentrateur DC 110. Le modem MDM 251 reçoit alors une nouvelle clef de chiffrement GMK, toujours chiffrée grâce à la clef de chiffrement OTP_PSK.

La procédure de réenregistrement dans le réseau de communication par courants porteurs en ligne 101 est donc longue à exécuter, ce qui retarde l'instant auquel le compteur électrique intelligent, qui a été déconnecté, est à nouveau à l'état opérationnel.

Il est souhaitable de pallier ces inconvénients de l'état de la technique, et notamment d'accélérer le retour à l'état opérationnel de tels compteurs électriques intelligents. Il est en outre souhaitable de trouver une solution qui permette de conserver un haut niveau de sécurité dans la protection d'informations sensibles, telles que les clefs de chiffrement, du réseau de communication par courants porteurs en ligne.

A cet effet, l'invention concerne un procédé de réenregistrement d'un compteur électrique intelligent dans un réseau de communication par courants porteurs en ligne de type *ad hoc.* Le procédé est tel que, suite à un enregistrement dans le réseau de communication par courants porteurs en ligne pendant lequel un modem du compteur électrique intelligent a obtenu des informations de routage ainsi que des informations de chiffrement par échanges de messages dans le réseau de communication par courants porteurs en ligne, ledit compteur électrique effectue l'étape suivante : sauvegarde en mémoire non volatile des informations de routage et des informations de chiffrement, les informations de routage étant sauvegardées en association avec une information représentative d'un instant auquel la sauvegarde est effectuée. Et lors d'un réenregistrement ultérieur du compteur électrique intelligent suite à une déconnexion du réseau de communication par courants porteurs en ligne, ledit compteur électrique effectue les étapes suivantes : récupération des informations de routage et de chiffrement précédemment sauvegardées dans la mémoire non volatile ; mise à jour des informations de routage en y supprimant toute information de route périmée entre l'instant auquel la sauvegarde est effectuée et un instant de récupération, par le modem, des informations de routage sauvegardées ; et utilisation, par le modem pour communiquer dans le réseau de communication par courants porteurs en ligne, des informations de chiffrement récupérées et des informations de routage mises à jour.

Les informations de routage comportent une adresse attribuée audit compteur électrique intelligent pour identifier ledit compteur électrique intelligent dans le réseau de communication par courants porteurs en ligne et une table de routage décrivant des routes dans ledit réseau de communication par courants porteurs en ligne, chaque route étant associée à une information temporelle de validité, et la mise à jour des informations de routage concerne la suppression de chaque route dont l'information temporelle de validité associée après mise à jour montre une péremption de ladite route.

Selon un mode de réalisation particulier, ledit compteur électrique intelligent sauvegarde en mémoire non volatile la table de routage sur suppression d'une ou plusieurs routes de la table de routage utilisée par le modem pour communiquer dans le réseau de communication par courants porteurs en ligne, et sur ajout d'une ou plusieurs routes dans ladite table de routage utilisée par le modem pour communiquer dans le réseau de communication par courants porteurs en ligne.

Selon un mode de réalisation particulier, ledit compteur électrique intelligent sauvegarde en mémoire non volatile la table de routage à intervalles réguliers.

Selon un mode de réalisation particulier, les informations de chiffrement comportent une clef de chiffrement utilisée par le modem pour communiquer de manière chiffrée dans le réseau de communication par courants porteurs en ligne.

Selon un mode de réalisation particulier, la clef de chiffrement est sauvegardée de manière chiffrée en mémoire non volatile.

Selon un mode de réalisation particulier, ledit compteur électrique intelligent sauvegarde en mémoire non volatile la clef de chiffrement sur réception d'un message de renouvellement de ladite clef de chiffrement.

Selon un mode de réalisation particulier, lorsque la mise à jour des informations de routage montre que lesdites informations de routage sont toutes périmées, le modem effectue le réenregistrement par échanges de messages dans le réseau de communication par courants porteurs en ligne afin de réobtenir les informations de routage et les informations de chiffrement.

Selon un mode de réalisation particulier, le compteur électrique intelligent implémentant un mécanisme de vérification de présence de lien de communication régissant le statut de l'état du réseau de communication par courants porteurs en ligne, le modem effectue le réenregistrement par échanges de messages dans le réseau de communication par courants porteurs en ligne afin de réobtenir les informations de routage et les informations de chiffrement lorsque le statut de l'état du réseau de communication par courants porteurs en ligne est périmé.

Selon un mode de réalisation particulier, le compteur électrique intelligent comporte une application, ainsi que : une unité de contrôle de l'application ; une unité de contrôle du modem ; une mémoire non volatile accessible par l'unité de contrôle de l'application mais pas l'unité de contrôle du modem ; et une mémoire volatile accessible par l'unité de contrôle du modem mais pas l'unité de contrôle de l'application. De plus, les sauvegardes des informations de routage et des informations de chiffrement en mémoire non volatile sont effectuées par l'unité de contrôle de l'application pour le compte de l'unité de contrôle du modem, et l'unité de contrôle du modem utilise la mémoire volatile pour stocker et mettre à jour les informations de routage et les informations de chiffrement utilisées par le modem pour communiquer dans le réseau de communication par courants porteurs en ligne.

L'invention concerne également un compteur électrique intelligent destiné à être utilisé dans un réseau de communication par courants porteurs en ligne de type *ad hoc.* Le compteur électrique intelligent est tel que, suite à un enregistrement dans le réseau de communication par courants porteurs en ligne pendant lequel un modem du compteur électrique intelligent a obtenu des informations de routage ainsi que des informations de chiffrement par échanges de messages dans le réseau de communication par courants porteurs en ligne, ledit compteur électrique implémente les moyens suivants : des moyens de sauvegarde en mémoire non volatile des informations de routage et des informations de chiffrement, les informations de routage étant sauvegardées en association avec une information représentative d'un instant auquel la sauvegarde est effectuée. Et lors d'un réenregistrement ultérieur du compteur électrique intelligent suite à une déconnexion du réseau de communication par courants porteurs en ligne, ledit compteur électrique implémente les moyens suivants : des moyens de récupération des informations de routage et de chiffrement précédemment sauvegardées dans la mémoire non volatile ; des moyens de mise à jour des informations de routage en y supprimant toute information de route périmée entre l'instant auquel la sauvegarde est effectuée et un instant de récupération, par le modem, des informations de routage sauvegardées ; des moyens d'utilisation par le modem, pour communiquer dans le réseau de communication par courants porteurs en ligne, des informations de chiffrement récupérées et des informations de routage mises à jour.

Selon un mode de réalisation particulier, le compteur électrique intelligent comporte une application, ainsi que : une unité de contrôle de l'application ; une unité de contrôle du modem ; une mémoire non volatile accessible par l'unité de contrôle de l'application mais pas par l'unité de contrôle du modem ; et une mémoire volatile accessible par l'unité de contrôle du modem mais pas par l'unité de contrôle de l'application. De plus, les sauvegardes des informations de routage et des informations de chiffrement en mémoire non volatile sont effectuées par l'unité de contrôle de l'application pour le compte de l'unité de contrôle du modem, et l'unité de contrôle du modem utilise la mémoire volatile pour stocker et mettre à jour les informations de routage et les informations de chiffrement utilisées par le modem pour communiquer dans le réseau de communication par courants porteurs en ligne.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, selon l'un quelconque de ses modes de réalisation, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans le cadre d'une gestion automatisée à distance de compteurs électriques intelligents ;
- la Fig. 2 illustre schématiquement des échanges survenant lors d'une mise en service d'un compteur électrique intelligent dans le système de communication de la Fig. 1, selon l'état de la technique ;
- la Fig. 3 illustre schématiquement un agencement interne de compteur électrique intelligent, selon un mode de réalisation de la présente invention ;
- la Fig. 4 illustre schématiquement un exemple d'architecture matérielle d'une unité de contrôle de compteur électrique intelligent ;
- la Fig. 5 illustre schématiquement un algorithme de mise en service d'un compteur électrique intelligent, selon un mode de réalisation de la présente invention ;
- la Fig. 6 illustre schématiquement un algorithme de sauvegarde d'informations de routage, selon un mode de réalisation de la présente invention ;
- la Fig. 7 illustre schématiquement un algorithme de sauvegarde d'informations de chiffrement, selon un mode de réalisation de la présente invention ; et
- les Figs. 8 et 9 illustrent schématiquement des échanges survenant lors d'une mise en service de compteur électrique intelligent, selon un mode de réalisation de la présente invention.

L'invention détaillée ci-après est implémentée dans un réseau de communication par courants porteurs en ligne qui est un réseau de routage *ad hoc*, *e.g.* conforme au standard G3-PLC, tel que le réseau de communication par courants porteurs en ligne 101. Selon un mode de réalisation préféré, le réseau de communication par courants porteurs en ligne est conforme au standard G3-PLC.

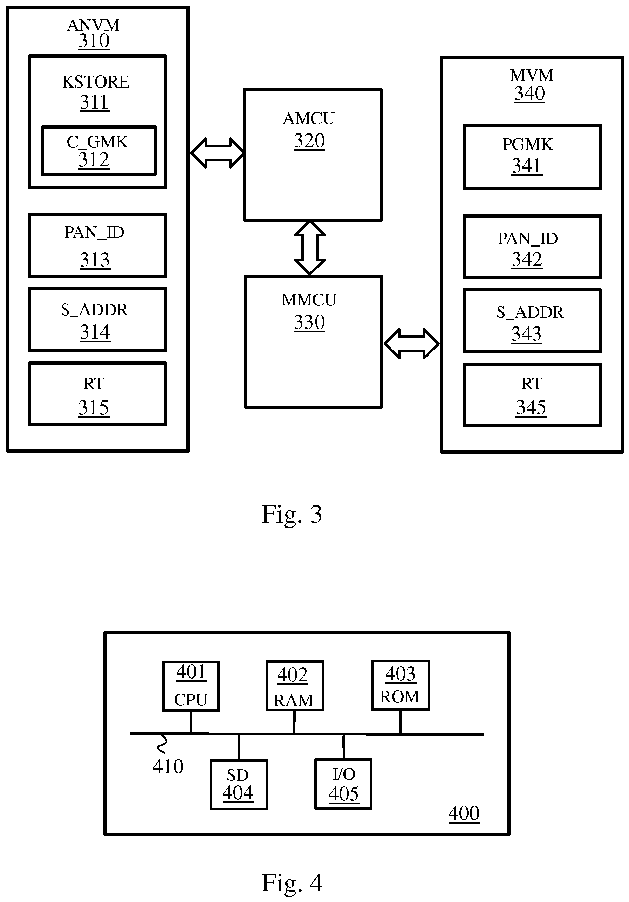

La **Fig. 3** illustre schématiquement un agencement interne de compteur électrique intelligent C 120, selon un mode de réalisation de la présente invention. Le modem MDM 251 du compteur électrique intelligent C 120 comporte une unité de contrôle MMCU 330 et l'application APP 252 comporte une unité de contrôle AMCU 320. Le modem MDM 251 et l'application APP 252 communiquent par le biais de leurs unités de contrôle respectives.

L'unité de contrôle AMCU 320 est associée à une mémoire non volatile ANVM 310, telle qu'une mémoire Flash. La mémoire non volatile ANVM 310 comporte des zones mémoire destinées à stocker un trousseau KSTORE 311 dans lequel est incluse une version chiffrée C_GMK de la clef de chiffrement GMK. La version chiffrée C_GMK de la clef de chiffrement GMK est déterminée par le modem MDM 251 et est sauvegardée dans la mémoire non volatile ANVM 310 par l'application APP 252 pour le compte du modem MDM 251. Cet aspect est décrit par la suite.

La mémoire non volatile ANVM 310 comporte aussi des zones mémoire destinées à sauvegarder des informations de routage utilisées par le modem MDM 251 pour communiquer dans le réseau de communication par courants porteurs en ligne 101. Ces sauvegardes incluent une copie de sauvegarde 315 de la table de routage RT, ainsi qu'une copie de sauvegarde de l'adresse S_ADDR 314 attribuée audit compteur électrique intelligent C 120 pour identifier ledit compteur électrique intelligent C 120 dans le réseau de communication par courants porteurs en ligne 101. Ces sauvegardes incluent préférentiellement aussi une copie de sauvegarde 313 de l'identifiant PAN_ID du réseau de communication par courants porteurs en ligne 101. Ces informations de routage sont ainsi sauvegardées dans la mémoire non volatile ANVM 310 par l'application APP 252 pour le compte du modem MDM 251. Cet aspect est aussi décrit par la suite.

Les sauvegardes faites dans la mémoire non volatile ANVM 310 par l'application APP 252 pour le compte du modem MDM 251 visent à permettre au compteur électrique intelligent C 120 de se réenregistrer rapidement dans le réseau de communication par courants porteurs en ligne 101, comme détaillé par la suite.

L'unité de contrôle MMCU 330 est associée à une mémoire volatile MVM 340, telle qu'une mémoire vive RAM (« Random Access Memory » en anglais). La mémoire volatile MVM 340 est, par structure du compteur électrique intelligent C 120, inaccessible pour l'unité de contrôle AMCU 320. La mémoire volatile MVM 340 comporte des zones mémoire destinées à stocker la clef de chiffrement GMK, préférentiellement sous forme chiffrée PGMK 341 pour éviter d'être lisible en clair par dumping de la mémoire volatile MVM 340. La version chiffrée de la clef de chiffrement GMK stockée dans la mémoire volatile MVM 340 est obtenue par le modem MDM 251 par chiffrement grâce à une clef de chiffrement, dite clef secrète, préconfigurée (comme la clef de chiffrement OTP_PSK) au sein de l'unité de contrôle MMCU 330 et donc non accessible par l'unité de contrôle AMCU 320.

La mémoire volatile MVM 340 comporte aussi des zones mémoire destinées à stocker les informations de routage utilisées par le modem MDM 251 pour communiquer dans le réseau de communication par courants porteurs en ligne 101. Ainsi, le mémoire volatile MVM 340 comporte des zones mémoire pour :
- stocker la table de routage RT 345 que le modem MDM 251 utilise pour sélectionner des routes dans le réseau de communication par courants porteurs en ligne 101 ; et
- stocker l'adresse S_ADDR 343 que le modem MDM 251 utilise comme identifiant pour communiquer dans le réseau de communication par courants porteurs en ligne 101.

Préférentiellement, le mémoire volatile MVM 340 comporte préférentiellement une zone mémoire pour de plus :
- stocker l'identifiant PAN_ID 342 dans le réseau de communication par courants porteurs en ligne 101

Les données stockées dans la mémoire volatile MVM 340 sont continuellement utilisées par le modem MDM 251 pour communiquer au sein du réseau de communication par courants porteurs en ligne 101 jusqu'à ce que le compteur électrique intelligent C 120 en question en soit déconnecté.

A noter que l'unité de contrôle MMCU 330 est munie d'une horloge temps-réel RTC (« Real-Time Clock » en anglais) permettant au modem MDM 251 de disposer d'une référence temporelle absolue, c'est-à-dire une référence temporelle qui reste cohérente après déconnexion et réenregistrement subséquent du compteur électrique C 120 en question dans le réseau de communication par courants porteurs en ligne 101. Cela signifie que, au réenregistrement dans le réseau de communication par courants porteurs en ligne 101, le compteur électrique intelligent C 120 en question est directement synchronisé temporellement avec les autres dispositifs, à savoir le dispositif concentrateur DC 110 et les autres compteurs électriques intelligents C 120, ce qui permet d'éviter toute désynchronisation de mécanisme de vérification de présence de lien de communication de type « Keep Alive » régissant le statut de l'état du réseau de communication par courants porteurs en ligne 101.

La **Fig. 4** illustre schématiquement un exemple d'architecture matérielle d'une unité de contrôle de compteur électrique intelligent C 120, telle que l'unité de contrôle AMCU 320 et l'unité de contrôle MMCU 330.

Le compteur électrique intelligent C 120 en question comprend alors, reliés par un bus de communication 410 : un processeur ou CPU (« Central Processing Unit » en anglais) 401 ; une mémoire vive RAM 402, par exemple la mémoire MVM 340 ; une mémoire morte ROM (« Read Only Memory » en anglais) 403 ; une unité de stockage 404, telle qu'un disque dur HDD (« Hard Disk Drive » en anglais), ou un lecteur de support de stockage, tel qu'un lecteur de cartes SD (« Secure Digital » en anglais) ; un ensemble d'entrées-sorties 405 permettant à l'unité de contrôle de communiquer avec d'autres unités et/ou mémoires et/ou composants du compteur électrique intelligent C 120.

Le processeur CPU 401 est capable d'exécuter des instructions chargées dans la mémoire RAM 402 à partir de la mémoire ROM 403, d'une mémoire externe (non représentée), d'un support de stockage (tel qu'une carte SD), ou d'un réseau de communication autre que le réseau de communication par courants porteurs en ligne 101. Lorsque le compteur électrique intelligent C 120 en question est mis sous tension, le processeur 201 est capable de lire de la mémoire RAM 202 des instructions et de les exécuter. Ces instructions forment un programme d'ordinateur causant une implémentation, par le processeur 201, de tout ou partie des algorithmes et étapes décrits ci-après en relation avec l'unité de contrôle concernée.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

D'une manière générale, chaque unité de contrôle du compteur électrique intelligent C 120 comporte ainsi de la circuiterie électronique configurée pour implémenter tout ou partie des algorithmes et étapes décrits ci-après en relation avec l'unité de contrôle concernée.

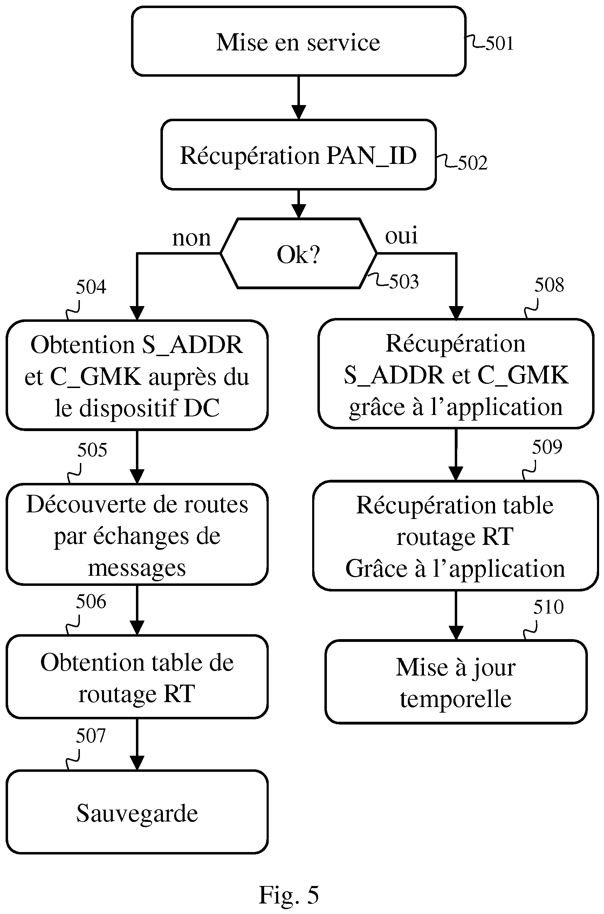

La **Fig. 5** illustre schématiquement un algorithme de mise en service de compteur électrique intelligent C 120, selon un mode de réalisation de la présente invention.

Dans une étape 501, le compteur électrique intelligent C 120 est mis en service et détecte la présence du réseau de communication par courants porteurs en ligne 101. Le compteur électrique intelligent C 120 cherche alors à intégrer ou réintégrer, suite à une déconnexion, le réseau de communication par courants porteurs en ligne 101.

Dans une étape 502, le modem MDM 251 cherche à récupérer auprès de l'application APP 252 un identifiant PAN_ID qui aurait été précédemment sauvegardé par l'application APP 252 pour le compte du modem MDM 251. Si un tel identifiant PAN_ID a été précédemment sauvegardé par l'application APP 252, cela signifie que le compteur électrique intelligent C 120 était précédemment connecté au réseau de communication par courants porteurs en ligne 101 et en a été déconnecté. Sinon, cela signifie que c'est la toute première mise en service du compteur électrique intelligent C 120.

Dans une étape 503, le modem MDM 251 vérifie si l'application APP 252 a fourni l'identifiant PAN_ID recherché. Si tel est le cas, une étape 508 est effectuée ; sinon, une étape 504 est effectuée.

Dans l'étape 504, le modem MDM 251 effectue un enregistrement dans le réseau de communication par courants porteurs en ligne 101, comme cela a pu être abordé en relation avec la Fig. 1. Ainsi, dans l'étape 504, le modem MDM 251 obtient l'adresse S_ADDR attribuée par le dispositif concentrateur DC 110 audit compteur électrique intelligent C 120, et ainsi que la version chiffrée C_GMK de la clef de chiffrement GMK. Le modem MDM 251 déchiffre, à l'aide de la clé OTP_PSK, la version chiffrée C_GMK de la clef de chiffrement GMK de sorte à obtenir la clef de chiffrement GMK. Dans l'optique d'une mise en mémoire dans la mémoire volatile MVM 340, le modem MDM 251 peut regénérer une nouvelle version chiffrée de la clef de chiffrement GMK, comme déjà évoqué, à l'aide de sa clé secrète.

Dans une étape 505, le modem MDM 251 effectue une découverte de routes dans le réseau de communication par courants porteurs en ligne 101. Ainsi, dans une étape 506, grâce à la découverte de routes, le modem MDM 251 remplit sa table de routage RT.

Les informations de routage et les informations de chiffrement ainsi obtenues par le modem MDM 251 dans les étapes 504 et 506 sont stockées par le modem MDM 251, comme déjà décrit en relation avec la Fig. 3, et sont notamment utilisées par le modem MDM 251 pour transmettre et recevoir des données applicatives pour le compte de l'application APP 252 dans le réseau de communication par courants porteurs en ligne 101.

Dans une étape 507, l'application APP 252 effectue une sauvegarde, dans la mémoire non volatile ANVM 310, des informations de routage et des informations de chiffrement pour le compte du modem MDM 251, comme déjà décrit en relation avec la Fig. 3. Cette sauvegarde peut être à l'initiative du modem MDM 251 ou de l'application APP 252, et sert au réenregistrement éventuel ultérieur du compteur électrique intelligent C 120 dans le réseau de communication par courants porteurs en ligne 101. Cette sauvegarde inclut en outre une information temporelle T représentative de l'instant auquel la sauvegarde est effectuée ; cette information temporelle permet de mettre à jour la validité temporelle des routes inscrites dans la table de routage RT au moment d'un éventuel réenregistrement ultérieur du compteur électrique intelligent C 120, comme décrit ci-après. Il est alors mis fin à l'algorithme de la Fig. 5.

Dans l'étape 508 et dans une étape 509, le modem MDM 251 récupère, grâce à l'application APP 252, les informations de routage et les informations de chiffrement précédemment sauvegardées par l'application APP 252 dans la mémoire non volatile ANVM 310 pour le compte du modem MDM 251. Plus particulièrement, dans l'étape 508, le modem MDM 251 obtient l'adresse S_ADDR précédemment attribuée par le dispositif concentrateur DC 110 audit compteur électrique intelligent C 120, ainsi que la version chiffrée C_GMK de la clef de chiffrement GMK. Le modem MDM 251 déchiffre, à l'aide de sa clé secrète, la version chiffrée C_GMK de la clef de chiffrement GMK de sorte à obtenir la clef de chiffrement GMK. Dans l'optique d'une mise en mémoire dans la mémoire volatile MVM 340, le modem MDM 251 peut regénérer une nouvelle version chiffrée de la clef de chiffrement GMK, comme déjà évoqué. De plus, dans l'étape 509, le modem MDM 251 obtient sa table de routage RT, telle que sauvegardée par l'application APP 252.

Puis dans une étape 510, le modem MDM 251 effectue une mise à jour temporelle de la table de routage RT récupérée grâce à la sauvegarde faite par l'application APP 252 pour le compte du modem 251. En d'autres termes, le modem MDM 251 efface de cette table de routage RT les routes qui sont périmées. Par exemple, la table de routage RT inclut une information de temps restant de validité de chaque route décrite dans ladite table de routage RT. Cette information de temps restant de validité est continuellement mise à jour par le modem MDM 251 au fil du temps, et au réenregistrement, le modem MDM 251 tient compte d'un temps D entre l'instant auquel la sauvegarde a été réalisée par l'application APP 252 (représenté par l'information temporelle T susmentionnée) et l'instant auquel les informations de routage (et plus particulièrement la table de routage) sauvegardées sont récupérées par le modem MDM 251. Le modem MDM 251 retranche alors le temps D de l'information de temps restant de validité de chaque route inscrite dans la table de routage RT récupérée. Si cela donne un résultat nul ou négatif, le modem MDM 251 efface la route correspondante de la table de routage RT ; sinon, le modem MDM 251 met à jour l'information de temps restant de validité avec le résultat obtenu.

A l'issue de l'étape 510, les informations de routage et les informations de chiffrement ainsi obtenues par le modem MDM 251 sont stockées par le modem MDM 251, comme déjà décrit en relation avec la Fig. 3, et sont notamment utilisées par le modem MDM 251 pour transmettre et recevoir des données applicatives pour le compte de l'application APP 252 dans le réseau de communication par courants porteurs en ligne 101.

Lorsque l'exécution de l'étape 510 mène à une table de routage RT mise à jour qui est vide de toute route, une nouvelle table de routage doit être construite. Cela peut être effectué par échanges des messages de découverte de routes ROUTE_RQ et ROUTE_RSP des étapes 206 et 207. Dans un mode de réalisation particulier, un réenregistrement complet du compteur électrique intelligent C 120 en question est effectué, comme si c'était le tout premier enregistrement dudit compteur électrique intelligent C 120 dans le réseau de communication par courants porteurs en ligne 101.

De plus, dans un mode de réalisation particulier, lorsque le mécanisme de vérification de présence de lien de communication de type « Keep Alive » montre, à la remise en service dudit compteur électrique intelligent C 120, que le statut de l'état du réseau de communication par courants porteurs en ligne 101 est périmé, alors un réenregistrement complet du compteur électrique intelligent C 120 en question est effectué, comme si c'était le tout premier enregistrement dudit compteur électrique intelligent C 120 dans le réseau de communication par courants porteurs en ligne 101.

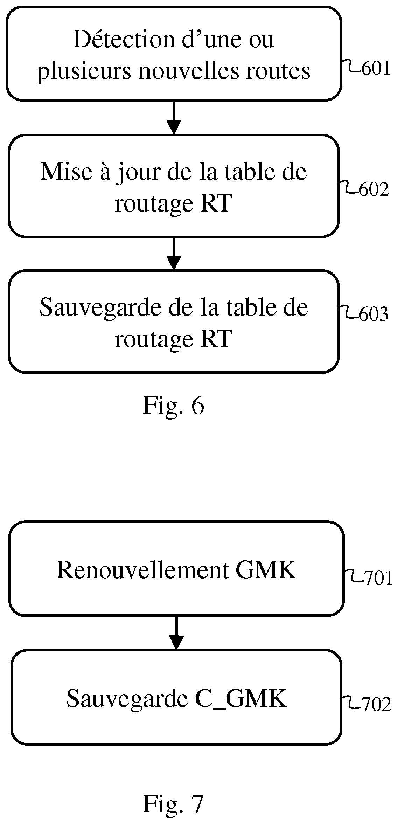

La **Fig. 6** illustre schématiquement un algorithme de sauvegarde d'informations de routage, selon un mode de réalisation de la présente invention.

Dans une étape 601, le modem MDM 251 détecte un besoin de mise à jour de la table de routage RT en cours d'utilisation, par ajout ou suppression d'une ou plusieurs routes. Une ou plusieurs routes sont ainsi à ajouter ou à retirer de la table de routage RT utilisée par le modem MDM 251.

Dans une étape 602, le modem MDM 251 effectue en conséquence la mise à jour de la table de routage RT stockée dans la mémoire volatile MVM 340.

Dans une étape 603, le modem MDM 251 demande à l'application APP 252 d'effectuer une sauvegarde, dans la mémoire non volatile ANVM 310, de la table de routage RT ainsi mise à jour, ainsi que de l'information temporelle T représentative de l'instant auquel la sauvegarde est effectuée.

Ainsi, la sauvegarde des informations de routage est effectuée à chaque changement de route au sein de la table de routage RT utilisée par le modem MDM 251.

En variante ou en complément, la sauvegarde de la table de routage RT en mémoire non volatile est effectuée de manière périodique. L'information temporelle T représentative de l'instant auquel la sauvegarde est effectuée est aussi sauvegardée à cette occasion. Cette sauvegarde périodique peut être initiée par le modem MDM 251 ou par l'application APP 252.

La **Fig.** 7 illustre schématiquement un algorithme de sauvegarde d'informations de chiffrement, selon un mode de réalisation de la présente invention.

Dans une étape 701, le modem MDM 251 reçoit un message en provenance du dispositif concentrateur DC 110 indiquant un renouvellement de la clef de chiffrement GMK. Une nouvelle clef de chiffrement GMK est alors fournie par le dispositif concentrateur DC 110, cette nouvelle clef de chiffrement étant chiffrée grâce à la clef secrète du modem MDM 251. Le modem MDM 251 met à jour la zone mémoire concernée de la mémoire volatile MVM 340 en conséquence.

Dans une étape 702, le modem MDM 251 demande à l'application APP 252 d'effectuer une sauvegarde, dans la mémoire non volatile ANVM 310, de la version chiffrée C_GMK de la clef de chiffrement GMK.

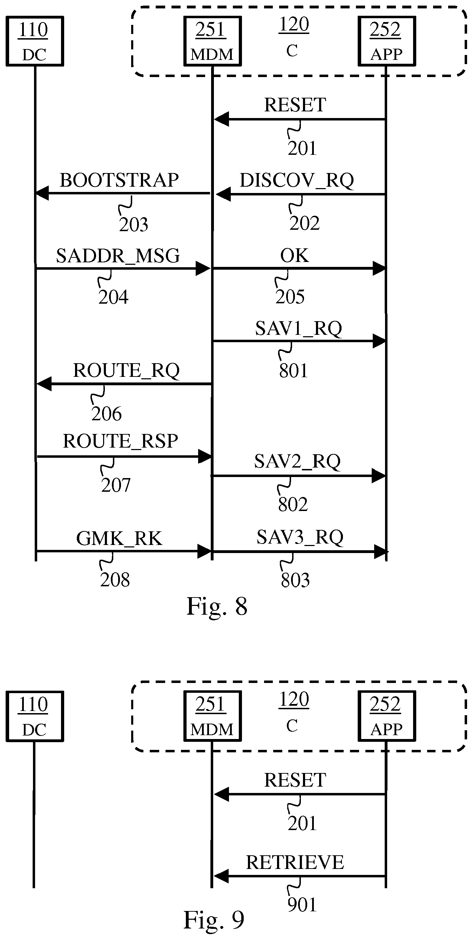

Les **Figs. 8 et 9** illustrent schématiquement des échanges survenant lors d'une mise en service de compteur électrique intelligent C 120, selon un mode de réalisation de la présente invention. La Fig. 8 montre les échanges entre le compteur électrique intelligent C 120 en question et le dispositif concentrateur DC 110 en cas de tout premier enregistrement dans le réseau de communication par courants porteurs en ligne 101, ou lors d'un réenregistrement, en cas de péremption de la table de routage RT précédemment sauvegardée. La Fig. 8 reprend la Fig. 1, et les étapes communes aux deux algorithmes portent les mêmes références respectives sur les deux Figs.

Lorsque le modem MDM 251 obtient l'identifiant PAN_ID, l'adresse S_ADDR qui lui est attribuée pour communiquer dans le réseau de communication par courants porteurs en ligne 101, ainsi que la clef de chiffrement GMK, une sauvegarde dans la mémoire non volatile ANVM 310 en est effectuée dans une étape 801. Un message SAV1_RQ depuis le modem MDM 251 vers l'application APP 252 incluant les informations à sauvegarder est utilisé pour ce faire. Ce message SAV1_RQ peut en variante être fusionné avec le message OK de l'étape 205.

Lorsque le modem MDM 251 met à jour la table de routage RT suite aux échanges de messages de découverte de route ROUTE_RQ et ROUTE_RSP dans les étapes 206 et 207, une sauvegarde dans la mémoire non volatile ANVM 310 en est effectuée dans une étape 802. Un message SAV2_RQ depuis le modem MDM 251 vers l'application APP 252 incluant les informations à sauvegarder est utilisé pour ce faire.

Lorsqu'un renouvellement de la clef de chiffrement GMK est opéré, une sauvegarde dans la mémoire non volatile ANVM 310 en est effectuée sous forme chiffrée dans une étape 803. Un message SAV3_RQ depuis le modem MDM 251 vers l'application APP 252 incluant les informations à sauvegarder est utilisé pour ce faire.

Ainsi, lors d'un éventuel réenregistrement ultérieur du compteur électrique intelligent C 120 dans le réseau de communication par courants porteurs en ligne 101, le modem MDM 251 dispose des informations de routage et de chiffrement qui peuvent permettre un retour à l'état opérationnel rapide du compteur électrique intelligent C 120 au sein du réseau de communication par courants porteurs en ligne 101.

La Fig. 9 montre les échanges entre le compteur électrique intelligent C 120 en question et le dispositif concentrateur DC 110 en cas de réenregistrement dans le réseau de communication par courants porteurs en ligne 101. Suite à l'étape 201, un message RETRIEVE est transmis dans une étape 901 depuis l'application APP 252 vers le modem MDM 251. Ce message RETRIEVE contient les informations de routage et de chiffrement précédemment sauvegardées par l'application APP 252 dans la mémoire non volatile ANVM 310 pour le compte du modem MDM 251. Si le traitement de ces informations de routage par le modem MDM 251 montre que lesdites données de routage sont périmées, alors le modem MDM 251 en informe l'application APP 252 et les échanges de la Fig. 8 sont effectués pour réobtenir les informations de routage et de chiffrement via le réseau de communication par courants porteurs en ligne 101.

La description ci-dessus tient compte d'une certaine architecture matérielle actuelle des compteurs électriques intelligents. Plus particulièrement, la description ci-dessus tient compte du fait que les compteurs électriques intelligents actuels disposent d'une mémoire non volatile attribuée à l'unité de contrôle en charge des questions applicatives et d'une mémoire volatile attribuée aux questions de gestion de la couche MAC (« Medium Access Control » en anglais). Une variante consiste cependant à affecter une mémoire non volatile au modem MDM 251 pour permettre audit modem MDM 251 d'effectuer les sauvegardes susmentionnées sans avoir recours à l'application APP 252.

Dans un mode de réalisation particulier, lorsque le compteur électrique intelligent C 120 est déconnecté du réseau de communication par courants porteurs en ligne 101 mais que ledit le compteur électrique intelligent C 120 reste électriquement alimenté (*e*.*g*. par une source d'alimentation de secours), une sauvegarde en mémoire non volatile des informations de routage est effectuée, de sorte à sauvegarder les informations détenues les plus récentes.

## Revendications

1. Procédé de réenregistrement d'un compteur électrique intelligent (120) dans un réseau de communication par courants porteurs en ligne (101) de type *ad hoc,* **caractérisé en ce que**, suite à un enregistrement dans le réseau de communication par courants porteurs en ligne (101) pendant lequel un modem (251) du compteur électrique intelligent (120) a obtenu (504, 506) des informations de routage ainsi que des informations de chiffrement par échanges de messages dans le réseau de communication par courants porteurs en ligne (101), ledit compteur électrique intelligent (120) effectue l'étape suivante :
- sauvegarde (507) en mémoire non volatile (310) des informations de routage et des informations de chiffrement, les informations de routage étant sauvegardées en association avec une information représentative d'un instant auquel la sauvegarde est effectuée ;
et lors d'un réenregistrement ultérieur du compteur électrique intelligent (120) suite à une déconnexion du réseau de communication par courants porteurs en ligne (101), ledit compteur électrique intelligent (120) effectue les étapes suivantes :
- récupération (508, 509) des informations de routage et de chiffrement précédemment sauvegardées dans la mémoire non volatile (310) ;
- mise à jour (510) des informations de routage en y supprimant toute information de route périmée entre l'instant auquel la sauvegarde est effectuée et un instant de récupération, par le modem (251), des informations de routage sauvegardées ;
- utilisation, par le modem pour communiquer dans le réseau de communication par courants porteurs en ligne (101), des informations de chiffrement récupérées et des informations de routage mises à jour.
dans lequel les informations de routage comportent une adresse attribuée audit compteur électrique intelligent (120) pour identifier ledit compteur électrique intelligent (120) dans le réseau de communication par courants porteurs en ligne (101) et une table de routage décrivant des routes dans ledit réseau de communication par courants porteurs en ligne (101), chaque route étant associée à une information temporelle de validité, et **en ce que** la mise à jour des informations de routage concerne la suppression de chaque route dont l'information temporelle de validité associée après mise à jour montre une péremption de ladite route.

2. Procédé selon la revendication 1, **caractérisé en ce que** ledit compteur électrique intelligent (120) sauvegarde en mémoire non volatile (310) la table de routage sur suppression d'une ou plusieurs routes de la table de routage utilisée par le modem (251) pour communiquer dans le réseau de communication par courants porteurs en ligne (101), et sur ajout d'une ou plusieurs routes dans ladite table de routage utilisée par le modem (251) pour communiquer dans le réseau de communication par courants porteurs en ligne (101).

3. Procédé selon l'une des revendications 1 et 2, **caractérisé en ce que** ledit compteur électrique intelligent (120) sauvegarde en mémoire non volatile (310) la table de routage à intervalles réguliers.

4. Procédé selon l'une des revendications 1 à 3, **caractérisé en ce que** les informations de chiffrement comportent une clef de chiffrement utilisée par le modem (251) pour communiquer de manière chiffrée dans le réseau de communication par courants porteurs en ligne (101).

5. Procédé selon la revendication 4, **caractérisé en ce que** la clef de chiffrement est sauvegardée de manière chiffrée en mémoire non volatile (310).

6. Procédé selon l'une des revendications 4 et 5, **caractérisé en ce que** ledit compteur électrique intelligent (120) sauvegarde (702) en mémoire non volatile (310) la clef de chiffrement sur réception (803, 701) d'un message de renouvellement de ladite clef de chiffrement.

7. Procédé selon l'une quelconque des revendications 1 à 6, **caractérisé en ce que**, lorsque la mise à jour des informations de routage montre que lesdites informations de routage sont toutes périmées, le modem (251) effectue le réenregistrement par échanges de messages dans le réseau de communication par courants porteurs en ligne (101) afin de réobtenir les informations de routage et les informations de chiffrement.

8. Procédé selon l'une quelconque des revendications 1 à 7, **caractérisé en ce que**, le compteur électrique intelligent (120) implémentant un mécanisme de vérification de présence de lien de communication régissant le statut de l'état du réseau de communication par courants porteurs en ligne (101), le modem (251) effectue le réenregistrement par échanges de messages dans le réseau de communication par courants porteurs en ligne (101) afin de réobtenir les informations de routage et les informations de chiffrement lorsque le statut de l'état du réseau de communication par courants porteurs en ligne (101) est périmé.

9. Procédé selon l'une quelconque des revendications 1 à 7, **caractérisé en ce que** le compteur électrique intelligent (120) comporte une application (252), ainsi que :
- une unité de contrôle de l'application (320) ;
- une unité de contrôle du modem (330) ;
- une mémoire non volatile (310) accessible par l'unité de contrôle de l'application (320) mais pas par l'unité de contrôle du modem (330) ; et
- une mémoire volatile (340) accessible par l'unité de contrôle du modem (330) mais pas par l'unité de contrôle de l'application (320) ;
et **en ce que** les sauvegardes des informations de routage et des informations de chiffrement en mémoire non volatile (310) sont effectuées par l'unité de contrôle de l'application (320) pour le compte de l'unité de contrôle du modem (330), et **en ce que** l'unité de contrôle du modem (320) utilise la mémoire volatile (340) pour stocker et mettre à jour les informations de routage et les informations de chiffrement utilisées par le modem (251) pour communiquer dans le réseau de communication par courants porteurs en ligne (101).

10. Produit programme d'ordinateur, **caractérisé en ce qu'**il comporte des instructions entraînant l'exécution par un compteur électrique intelligent (120) du procédé selon l'une quelconque des revendications 1 à 9, lorsque lesdites instructions sont exécutées par un processeur (401) dudit compteur électrique intelligent (120).

11. Support de stockage, **caractérisé en ce qu'**il stocke un programme d'ordinateur comportant des instructions entraînant l'exécution par un compteur électrique intelligent (120) du procédé selon l'une quelconque des revendications 1 à 9, lorsque lesdites instructions sont lues et exécutées par un processeur (401) dudit compteur électrique intelligent (120).

12. Compteur électrique intelligent (120) destiné à être utilisé dans un réseau de communication par courants porteurs en ligne (101) de type *ad hoc,* **caractérisé en ce que**, suite à un enregistrement dans le réseau de communication par courants porteurs en ligne (101) pendant lequel un modem (251) du compteur électrique intelligent (120) a obtenu des informations de routage ainsi que des informations de chiffrement par échanges de messages dans le réseau de communication par courants porteurs en ligne (101), ledit compteur électrique intelligent (120) implémente les moyens suivants :
- des moyens de sauvegarde en mémoire non volatile (310) des informations de routage et des informations de chiffrement, les informations de routage étant sauvegardées en association avec une information représentative d'un instant auquel la sauvegarde est effectuée ;
et lors d'un réenregistrement ultérieur du compteur électrique intelligent (120) suite à une déconnexion du réseau de communication par courants porteurs en ligne (101), ledit compteur électrique intelligent (120) implémente les moyens suivants :
- des moyens de récupération des informations de routage et de chiffrement précédemment sauvegardées dans la mémoire non volatile (310) ;
- des moyens de mise à jour des informations de routage en y supprimant toute information de route périmée entre l'instant auquel la sauvegarde est effectuée et un instant de récupération, par le modem (251), des informations de routage sauvegardées ;
- des moyens d'utilisation par le modem (251), pour communiquer dans le réseau de communication par courants porteurs en ligne (101), des informations de chiffrement récupérées et des informations de routage mises à jour
dans lequel les informations de routage comportent une adresse attribuée audit compteur électrique intelligent (120) pour identifier ledit compteur électrique intelligent (120) dans le réseau de communication par courants porteurs en ligne (101) et une table de routage décrivant des routes dans ledit réseau de communication par courants porteurs en ligne (101), chaque route étant associée à une information temporelle de validité, et **en ce que** la mise à jour des informations de routage concerne la suppression de chaque route dont l'information temporelle de validité associée après mise à jour montre une péremption de ladite route.

13. Compteur électrique selon la revendication 12, **caractérisé en ce que** le compteur électrique intelligent (120) comporte une application (252), ainsi que :
- une unité de contrôle de l'application (320) ;
- une unité de contrôle du modem (330) ;
- une mémoire non volatile (310) accessible par l'unité de contrôle de l'application (320) mais pas par l'unité de contrôle du modem (330) ; et
- une mémoire volatile (340) accessible par l'unité de contrôle du modem (330) mais par pas l'unité de contrôle de l'application (320) ;
et **en ce que** les sauvegardes des informations de routage et des informations de chiffrement en mémoire non volatile (310) sont effectuées par l'unité de contrôle de l'application (320) pour le compte de l'unité de contrôle du modem (330), et **en ce que** l'unité de contrôle du modem (330) utilise la mémoire volatile (340) pour stocker et mettre à jour les informations de routage et les informations de chiffrement utilisées par le modem (251) pour communiquer dans le réseau de communication par courants porteurs en ligne (101).

## Patentansprüche

1. Verfahren zur erneuten Registrierung eines intelligenten Stromzählers (120) in einem Powerline-Kommunikationsnetzwerkwerk (101) vom Typ Ad-Hoc, **dadurch gekennzeichnet, dass** nach einer Registrierung im Powerline-Kommunikationsnetzwerkwerk (101), während der ein Modem (251) des intelligenten Stromzählers (120) Routing-Informationen sowie Verschlüsselungs-Informationen durch den Austausch von Nachrichten im Powerline-Kommunikationsnetzwerkwerk (101) erhalten hat (504, 506), der intelligente Stromzähler (120) den folgenden Schritt ausführt:
- Sicherung (507) der Routing-Informationen und der Verschlüsselungs-Informationen in einem nichtflüchtigen Speicher (310), wobei die Routing-Informationen in Verbindung mit einer Information gesichert werden, die für einen Augenblick repräsentativ ist, in dem die Sicherung ausgeführt wird;
und bei einer späteren erneuten Registrierung des intelligenten Stromzählers (120) nach einer Trennung vom Powerline-Kommunikationsnetzwerkwerk (101) der intelligente Stromzähler (120) die folgenden Schritte ausführt:
- Wiedergewinnung (508, 509) der vorher im nichtflüchtigen Speicher (310) gesicherten Routing- und Verschlüsselungs-Informationen;
- Aktualisierung (510) der Routing-Informationen, indem aus ihnen jede zwischen dem Zeitpunkt, in dem die Sicherung ausgeführt wird, und einem Zeitpunkt der Wiedergewinnung der gesicherten Routing-Informationen durch das Modem (251) ungültig gewordene Routeninformation gelöscht wird;
- Verwendung, durch das Modem zur Kommunikation im Powerline-Kommunikationsnetzwerkwerk (101), der wiedergewonnenen Verschlüsselungs-Informationen und der aktualisierten Routing-Informationen,
wobei die Routing-Informationen eine dem intelligenten Stromzähler (120) zugeteilte Adresse, um den intelligenten Stromzähler (120) im Powerline-Kommunikationsnetzwerkwerk (101) zu identifizieren, und eine Routingtabelle aufweisen, die Routen im Powerline-Kommunikationsnetzwerkwerk (101) beschreibt, wobei jede Route einer temporären Gültigkeitsinformation zugeordnet ist, und dass die Aktualisierung der Routing-Informationen die Löschung jeder Route betrifft, deren nach Aktualisierung zugeordnete temporäre Gültigkeitsinformation ein Ungültigwerden der Route zeigt.

2. Verfahren nach Anspruch 1, **dadurch gekennzeichnet, dass** der intelligente Stromzähler (120) die Routingtabelle nach Löschen einer oder mehrerer Routen aus der vom Modem (251) verwendeten Routingtabelle, um im Powerline-Kommunikationsnetzwerkwerk (101) zu kommunizieren, und nach Hinzufügen einer oder mehrerer Routen in die vom Modem (251) verwendete Routingtabelle, um im Powerline-Kommunikationsnetzwerkwerk (101) zu kommunizieren, in einem nichtflüchtigen Speicher (310) sichert.

3. Verfahren nach einem der Ansprüche 1 und 2, **dadurch gekennzeichnet, dass** der intelligente Stromzähler (120) die Routingtabelle in gleichmäßigen Zeitabständen in einem nichtflüchtigen Speicher (310) sichert.

4. Verfahren nach einem der Ansprüche 1 bis 3, **dadurch gekennzeichnet, dass** die Verschlüsselungs-Informationen einen Schlüssel aufweisen, der vom Modem (251) verwendet wird, um verschlüsselt im Powerline-Kommunikationsnetzwerk (101) zu kommunizieren.

5. Verfahren nach Anspruch 4, **dadurch gekennzeichnet, dass** der Verschlüsselungsschlüssel verschlüsselt in einem nichtflüchtigen Speicher (310) gesichert wird.

6. Verfahren nach einem der Ansprüche 4 und 5, **dadurch gekennzeichnet, dass** der intelligente Stromzähler (120) den Verschlüsselungsschlüssel bei Empfang (803, 701) einer Erneuerungsnachricht des Verschlüsselungsschlüssels in einem nichtflüchtigen Speicher (310) sichert (702).

7. Verfahren nach einem der Ansprüche 1 bis 6, **dadurch gekennzeichnet, dass**, wenn die Aktualisierung der Routing-Informationen zeigt, dass die Routing-Informationen alle ungültig geworden sind, das Modem (251) die erneute Registrierung durch Austausch von Nachrichten im Powerline-Kommunikationsnetzwerk (101) ausführt, um die Routing-Informationen und die Verschlüsselungs-Informationen wieder zu erhalten.

8. Verfahren nach einem der Ansprüche 1 bis 7, **dadurch gekennzeichnet, dass**, da der intelligente Stromzähler (120) einen Überprüfungsmechanismus des Vorhandenseins eines Kommunikationslinks implementiert, der den Status des Zustands des Powerline-Kommunikationsnetzwerkes (101) bestimmt, das Modem (251) die erneute Registrierung durch Austausch von Nachrichten im Powerline-Kommunikationsnetzwerk (101) ausführt, um die Routing-Informationen und die Verschlüsselungs-Informationen wieder zu erhalten, wenn der Status des Zustands des Powerline-Kommunikationsnetzwerkes (101) ungültig geworden ist.

9. Verfahren nach einem der Ansprüche 1 bis 7, **dadurch gekennzeichnet, dass** der intelligente Stromzähler (120) eine Anwendung (252) aufweist, sowie:
- eine Steuereinheit der Anwendung (320);
- eine Steuereinheit des Modems (330);
- einen nichtflüchtigen Speicher (310), der für die Steuereinheit der Anwendung (320), aber nicht für die Steuereinheit des Modems (330) zugänglich ist; und
- einen flüchtigen Speicher (340), der für die Steuereinheit des Modems (330), aber nicht für die Steuereinheit der Anwendung (320) zugänglich ist;
und dass die Sicherungen der Routing-Informationen und der Verschlüsselungs-Informationen in einem nichtflüchtigen Speicher (310) von der Steuereinheit der Anwendung (320) im Auftrag der Steuereinheit des Modems (330) ausgeführt werden, und dass die Steuereinheit des Modems (320) den flüchtigen Speicher (340) verwendet, um die vom Modem (251) verwendeten Routing-Informationen und Verschlüsselungs-Informationen, um im Powerline-Kommunikationsnetzwerk (101) zu kommunizieren, zu speichern und zu aktualisieren.

10. Computerprogrammprodukt, **dadurch gekennzeichnet, dass** es Anweisungen aufweist, die die Ausführung des Verfahrens nach einem der Ansprüche 1 bis 9 durch einen intelligenten Stromzähler (120) bewirken, wenn die Anweisungen von einem Prozessor (401) des intelligenten Stromzählers (120) ausgeführt werden.

11. Speicherträger, **dadurch gekennzeichnet, dass** er ein Computerprogramm speichert, das Anweisungen aufweist, die die Ausführung des Verfahrens nach einem der Ansprüche 1 bis 9 durch einen intelligenten Stromzähler (120) bewirken, wenn die Anweisungen von einem Prozessor (401) des intelligenten Stromzählers (120) gelesen und ausgeführt werden.

12. Intelligenter Stromzähler (120), der dazu bestimmt ist, in einem Powerline-Kommunikationsnetzwerk (101) vom Ad-Hoc-Typ verwendet zu werden, **dadurch gekennzeichnet, dass** nach einer Registrierung im Powerline-Kommunikationsnetzwerk (101), während der ein Modem (251) des intelligenten Stromzählers (120) Routing-Informationen sowie Verschlüsselungs-Informationen durch den Austausch von Nachrichten im Powerline-Kommunikationsnetzwerk (101) erhalten hat, der intelligente Stromzähler (120) die folgenden Einrichtungen implementiert:
- Einrichtungen zur Sicherung der Routing-Informationen und der Verschlüsselungs-Informationen in einem nichtflüchtigen Speicher (310), wobei die Routing-Informationen in Verbindung mit einer Information gesichert werden, die für einen Augenblick repräsentativ ist, in dem die Sicherung ausgeführt wird;
und bei einer späteren erneuten Registrierung des intelligenten Stromzählers (120) nach einer Trennung vom Powerline-Kommunikationsnetzwerk (101) der intelligente Stromzähler (120) die folgenden Einrichtungen implementiert:
- Einrichtungen zur Wiedergewinnung der vorher im nichtflüchtigen Speicher (310) gesicherten Routing- und Verschlüsselungs-Informationen;
- Einrichtungen zur Aktualisierung der Routing-Informationen, indem in ihnen jede zwischen dem Zeitpunkt, in dem die Sicherung ausgeführt wird, und einem Wiedergewinnungszeitpunkt der gesicherten Routing-Informationen ungültig gewordene Routeninformation durch das Modem (251) gelöscht wird;
- Einrichtungen zur Verwendung, durch das Modem (251) zur Kommunikation im Powerline-Kommunikationsnetzwerk (101), der wiedergewonnenen Verschlüsselungs-Informationen und der aktualisierten Routing-Informationen,
wobei die Routing-Informationen eine dem intelligenten Stromzähler (120) zugeteilte Adresse, um den intelligenten Stromzähler (120) im Powerline-Kommunikationsnetzwerk (101) zu identifizieren, und eine Routingtabelle aufweisen, die Routen im Powerline-Kommunikationsnetzwerk (101) beschreibt, wobei jede Route einer temporären Gültigkeitsinformation zugeordnet ist, und dass die Aktualisierung der Routing-Informationen das Löschen jeder Route betrifft, deren nach der Aktualisierung zugeordnete temporäre Gültigkeitsinformation ein Ungültigwerden der Route zeigt.

13. Stromzähler nach Anspruch 12, **dadurch gekennzeichnet, dass** der intelligente Stromzähler (120) eine Anwendung (252) aufweist, sowie:
- eine Steuereinheit der Anwendung (320);
- eine Steuereinheit des Modems (330);
- einen nichtflüchtigen Speicher (310), der für die Steuereinheit der Anwendung (320), aber nicht für die Steuereinheit des Modems (330) zugänglich ist; und
- einen flüchtigen Speicher (340), der für die Steuereinheit des Modems (330), aber nicht für die Steuereinheit der Anwendung (320) zugänglich ist;
und dass die Sicherungen der Routing-Informationen und der Verschlüsselungs-Informationen in einem nichtflüchtigen Speicher (310) von der Steuereinheit der Anwendung (320) im Auftrag der Steuereinheit des Modems (330) ausgeführt werden, und dass die Steuereinheit des Modems (320) den flüchtigen Speicher (340) verwendet, um die vom Modem (251) verwendeten Routing-Informationen und Verschlüsselungs-Informationen, um im Powerline-Kommunikationsnetzwerk (101) zu kommunizieren, zu speichern und zu aktualisieren.

## Claims

1. Method for re-registering a smart electricity meter (120) in an ad hoc powerline communication network (101), **characterized in that**, following a registration in the powerline communication network (101) during which a modem (251) of the smart electricity meter (120) has obtained (504, 506) routing information as well as encryption information by exchanges of messages in the powerline communication network (101), said smart electricity meter (120) performs the following step:
- saving (507) in non-volatile memory (310) routing information and encryption information, the routing information being saved in association with information representing an instant at which the saving is performed;
and, in a subsequent re-registration of the smart electricity meter (120) following a disconnection from the powerline communication network (101), said smart electricity meter (120) performs the following steps:
- retrieval (508, 509) of the routing and encryption information previously saved in the non-volatile memory (310);
- updating (510) of the routing information by deleting therefrom any route information that has lapsed between the instant at which the saving is performed and an instant of retrieval, by the modem (251), of the saved routing information;
- use, by the modem for communicating in the powerline communication network (101), of the encryption information retrieved and the routing information updated,
wherein the routing information comprises an address allocated to said smart electricity meter (120) for identifying said smart electricity meter (120) in the powerline communication network (101) and a routing table describing routes in said powerline communication network (101), each route being associated with time validity information, and wherein the updating of the routing information relates to the deletion of each route the associated time validity information of which after updating shows lapsing of said route.

2. Method according to claim 1, **characterized in that** said smart electricity meter (120) saves in non-volatile memory (310) the routing table on deletion of one or more routes from the routing table used by the modem (251) for communicating in the powerline communication network (101), and on addition of one or more routes in said routing table used by the modem (251) for communicating in the powerline communication network (101).

3. Method according to one of claims 1 and 2, **characterized in that** said smart electricity meter (120) saves the routing table in non-volatile memory (310) at regular intervals.

4. Method according to one of claims 1 to 3, **characterized in that** the encryption information comprises an encryption key used by the modem (251) for communicating in an encrypted manner in the powerline communication network (101).

5. Method according to claim 4, **characterized in that** the encryption key is saved in non-volatile memory (310) in an encrypted manner.

6. Method according to one of claims 4 and 5, **characterized in that** said smart electricity meter (120) saves (702) the encryption key in non-volatile memory (310) on reception (803, 701) of a message renewing said encryption key.

7. Method according to any one of claims 1 to 6, **characterized in that**, when the updating of the routing information shows that said routing information has all lapsed, the modem (251) performs the re-registration by exchanges of messages in the powerline communication network (101) in order to re-obtain the routing information and the encryption information.

8. Method according to any one of claims 1 to 7, **characterized in that**, the smart electricity meter (120) implementing a mechanism for checking the presence of a communication link governing the status of the state of the powerline communication network (101), the modem (251) performs the re-registration by exchanges of messages in the powerline communication network (101) in order to re-obtain the routing information and the encryption information when the status of the state of the powerline communication network (101) has lapsed.

9. Method according to any one of claims 1 to 7, **characterized in that** the smart electricity meter (120) comprises an application (252), as well as:
- a unit (320) controlling the application;
- a unit (330) controlling the modem;
- a non-volatile memory (310) accessible to the unit controlling the application (320) but not to the unit (330) controlling the modem; and
- a volatile memory (430) accessible to the unit (330) controlling the modem but not to the unit controlling the application (320);
and **in that** the routing information and the encryption information are saved in non-volatile memory (310) by the unit (320) controlling the application on behalf of the unit (330) controlling the modem and **in that** the unit (320) controlling the modem uses the volatile memory (340) for storing and updating the routing information and the encryption information used by the modem (251) for communicating in the powerline communication network (101).

10. Computer program product, **characterized in that** it comprises instructions causing the execution, by a smart electricity meter (120), of the method according to any one of claims 1 to 9, when said instructions are executed by a processor (401) of said smart electricity meter (120).

11. Storage medium, **characterized in that** it stores a computer program comprising instructions causing the execution, by a smart electricity meter (120), of the method according to any one of claims 1 to 9, when said instructions are read and executed by a processor (401) of said smart electricity meter (120).

12. Smart electricity meter (120) intended to be used in an ad hoc powerline communication network (101), **characterized in that**, following a registration in the powerline communication network (101) during which a modem 9251) of the smart electricity meter (120) has obtained routing information and encryption information by exchanges of messages in the powerline communication network (101), said smart electricity meter (120) implements the following means:
- means for saving in non-volatile memory (310) routing information and encryption information, the routing information being saved in association with information representing an instant at which the saving is performed;
and, at the time of a subsequent re-registration of the smart electricity meter (120) following a disconnection of the powerline communication network (101), said electricity meter (120) implements the following means:
- means for retrieving routing and encryption information previously saved in the non-volatile memory (310);
- means for updating the routing information by deleting therein any route information that has lapsed between the instant at which the saving is performed and an instant of retrieval, by the modem, of the routing information saved;
- means for using, by the modem (251), for communicating in the powerline communication network (101), the encryption information retrieved and the routing information updated
wherein the routing information comprises an address allocated to said smart electricity meter (120) for identifying said smart electricity meter (120) in the powerline communication network (101) and a routing table describing routes in said powerline communication network (101), each route being associated with time validity information, and wherein the updating of the routing information relates to the deletion of each route the associated time validity information of which after updating shows lapsing of said route.

13. Electricity meter according to claim 12, **characterized in that** the smart electricity meter (120) comprises an application (252), as well as:
- a unit (320) controlling the application;
- a unit (330) controlling the modem;
- a non-volatile memory (310) accessible to the unit (320) controlling the application but not to the unit (330) controlling the modem; and
- a volatile memory (340) accessible to the unit (330) controlling the modem but not to the unit (320) controlling the application;
and **in that** the routing information and the encryption information are saved in non-volatile memory (310) by the unit (320) controlling the application on behalf of the unit (330) controlling the modem, and **in that** the unit (330) controlling the modem uses the volatile memory (340) for storing and updating the routing information and the encryption information used by the modem (251) for communicating in the powerline communication network (101).
